# EUROPÄISCHE PATENTSCHRIFT

(11) **EP 2 014 510 B1**
(45) Veröffentlichungstag und Bekanntmachung des Hinweises auf die Patenterteilung: **18.12.2013**
(21) Anmeldenummer: 08011750.0
(22) Anmeldetag: 28.06.2008
(51) Int. Cl.: B60R 9/06, B60R 9/10

(54) **Lastenträger für ein Kraftfahrzeug**
Load carrier for a motor vehicle
Support de charge pour un véhicule automobile

(30) Priorität: 11.07.2007 DE 102007033015; 31.01.2008 DE 102008006814
(43) Veröffentlichungstag der Anmeldung: 14.01.2009
(60) Teilanmeldung: 13005196.4
(73) Patentinhaber: WESTFALIA - Automotive GmbH, 33378 Rheda-Wiedenbrück (DE)
(72) Erfinder: Hermbusch, Gerhard, 33449 Langenberg (DE)
(74) Vertreter: Bregenzer, Michael

(56) Entgegenhaltungen:
- EP-A1- 1 568 542
- DE-A1- 10 309 327
- US-A- 4 875 608
- US-A- 5 579 973
- US-A1- 2005 116 002
- US-A1- 2007 102 465
- US-B1- 6 431 423

## Beschreibung

Die Erfindung betrifft einen Lastenträger für ein Kraftfahrzeug, insbesondere einen Personenkraftwagen, mit einem zum Tragen einer Last vorgesehenen Ladegestell, das in einer Arbeitsstellung des Lastenträgers nach hinten vor einen Heckbereich des Kraftfahrzeugs vorsteht und einen Ladebereich zum Aufladen einer Last bereitstellt, mit einer Schwenkteilanordnung mit mindestens einem Schwenkteil zum Erweitern des Ladebereichs gemäß dem Oberbegriff des Anspruchs 1.

Ein solcher Lastenträger ist aus US 5579973 A bekannt.

Ein weiterer Lastenträger ist beispielsweise in der nicht vorveröffentlichten Patentanmeldung DE 10 2007 023 495 beschrieben. Dieser Lastenträger hat mehrere Schwenkteile in Gestalt von Tragerinnen für Fahrräder, die an einem Ladegestell schwenkbeweglich angeordnet sind. Im Bereich von Schwenklagern des Ladegestells für die Schwenkteile ist eine Außenverzahnung vorgesehen, die mit einer Innenverzahnung der Schwenkteile korrespondiert derart, dass die Schwenkteile zur jeweiligen Schwenkfestlegung axial verschoben werden. Dann greifen die Zahnungen ineinander und die Schwenkteile sind schwenkfest festgelegt.

Allerdings ist die Handhabung dieses Lastenträgers nicht immer ganz einfach, insbesondere wenn die Zahnungen mit wenig Spiel ineinander greifen. Dies ist andererseits sinnvoll, damit die Schwenkfestlegung ebenfalls spielfrei erfolgt.

Es ist daher die Aufgabe der vorliegenden Erfindung, einen einfacher handhabbaren Lastenträger zu schaffen, der vorteilhaft kompakt baut.

Zur Lösung der Aufgabe ist ein Lastenträger gemäß der technischen Lehre des Anspruchs 1 vorgesehen.

Der Lastenträger nach dem erfindungsgemäßen Konzept ist vorzugsweise ein Fahrrad-Lastenträger. An einem oder mehreren der Schwenkteile sind vorzugsweise Rinnen vorgesehen, die ein Fahrrad aufnehmen können. Die Fahrräder werden in die Rinnen eingestellt.

Das oder die Schwenkteile sind vorzugsweise um horizontale, in Fahrzeuglängsrichtung verlaufende Schwenkachsen schwenkbar.

Der erfindungsgemäße Lastenträger hat den Vorteil, dass für die Schwenkfestlegung der Schwenkteile, insbesondere von Tragerinnen für Fahrräder, keine separaten Befestigungsmittel oder Schwenkfestlegungsmittel vorhanden sein müssen, sondern die Schwenkfestlegung durch die erfindungsgemäße Lastbefestigungseinrichtung in Verbindung mit der auf das Schwenkteil aufgelegten Last erfolgt. Mit einer einzigen Bedienhandlung sind somit nicht nur die Last, sondern auch das jeweilige Schwenkteil am Lastenträger ortsfest festgelegt.

Ein weiterer Grundgedanke der Erfindung ist, das die Lastbefestigungseinrichtung unmittelbar an dem Ladegestell am Ladegestell-Lagerbereich festgelegt ist. Somit erfolgt die Schwenkfestlegung sozusagen vor Ort. Zwar wäre es denkbar, beispielsweise einen vertikal stehenden Träger zur Schwenkfestlegung der Schwenkteile zu benutzen. Gegenüber dieser Lösung hat die Lastbefestigungseinrichtung, die am Lagerbereich für die Schwenkteile angeordnet ist, jedoch den Vorteil, dass beispielsweise Verwindungen und Bewegungen der Last einen geringen Einfluss auf die Schwenkfestlegung des Schwenkteiles haben.

Die Lastbefestigungseinrichtung ist an einander entgegengesetzten Seiten des mindestens einen Schwenkteils an dem Ladegestell befestigt. Das Schwenkteil befindet sich dann zwischen den Anlenkpunkten, beispielsweise Ladegestell-Halterungen, der mindestens einen Lastbefestigungseinrichtung.

Die Lastbefestigungseinrichtung enthält vorzugsweise eine Spanneinrichtung zum Verspannen der Last an dem Ladegestell oder bildet eine solche Spanneinrichtung. Damit ist eine sehr feste Befestigung der Last an dem Lastenträger und zudem eine solide Schwenkfestlegung erzielbar.

Eine Befestigung der Lastbefestigungseinrichtung innerhalb des Schwenkbereichs des jeweiligen Schwenkteils, jedoch nahe bei dem Schwenkanschlag für die Gebrauchsstellung oder außerhalb eines Schwenkbereichs des jeweiligen Schwenkteils, beispielsweise unterhalb des Schwenkanschlages, an dem Ladegestell ist vorteilhaft. Die Lastbefestigungseinrichtung kann auch vorteilhaft bezüglich der Schwenkachse axial seitlich neben einem Schwenkanschlag für das jeweilige Schwenkteil an dem Ladegestell festgelegt sein.

Vorteilhaft hat das Schwenkteil einen Auflagebereich zum Auflegen der Last, beispielsweise einen Aufstellbereich oder Aufstandsbereich für ein Fahrrad, der vom Schwenkteil-Lagerbereich, d.h. beispielsweise vom Schwenklagerende des Schwenkteiles, entfernt ist. Die Lastbefestigungseinrichtung greift die Last an einem von dem Auflagebereich entfernten Haltebereich an. Beispielsweise umgreift die Lastbefestigungseinrichtung eine Felge des Fahrrads abseits des Aufstandsbereiches. Der Haltebereich für die Lastbefestigungseinrichtung ist zweckmäßigerweise näher beim Schwenkteil-Lagerbereich als der Aufstellbereich für das Fahrrad. Insgesamt wird so ein vorteilhaftes Kräftedreieck zwischen dem Schwenkteil-Lagerbereich, dem Haltebereich für die Lastbefestigungseineinrichtung an der Last und dem Auflagebereich am Schwenkteil gebildet. Die Lastbefestigungseinrichtung übt vorteilhaft eine Zugkraft in Richtung des Ladegestell-Lagerbereichs aus, was die beladene Lastenträger-Struktur versteift. Diese Zugkraft verläuft vorzugsweise in Fahrzeugquerrichtung.

Die Lastbefestigungseinrichtung weist vorteilhaft eine Umgreifeinrichtung zum Umgreifen der Last auf. Die Umgreifeinrichtung umgreift zweckmäßigerweise nicht nur die Last, sondern auch das mindestens eine Schwenkteil, wenn dieses in seiner Gebrauchsstellung ist. Beispielsweise kann als Umgreifeinrichtung ein Umgreifbügel, ein Umgreifhaken oder dergleichen verwendet werden. Diese Einrichtungen können beispielsweise aus Metall oder Kunststoff sein.

Vorteilhaft ist jedoch ein flexibler Halteriemen, der auch mehrteilig sein kann, der die Last umschlingt. Der Riemen hat beispielsweise zwei oder mehr Halteriementeile, die miteinander verrastend sind.

Ein Halteriementeil hat z. B. eine Rastaufnahme zum Verrasten mit am anderen Halteriementeil vorgesehenen Rastvorsprüngen. Beispielsweise kann das Halteriementeil mit den Rastvorsprüngen durch eine federnde Rastaufnahme hindurchgezogen werden, die mit den Rastaufnahmen verrastet. Somit kann der Halteriemen gespannt werden.

Vorzugsweise ist ein Spannhebel vorgesehen, der den Halteriemen spannt. Der Spannhebel kann beispielsweise am Ladegestell fest oder vorzugsweise schwenkbeweglich festgelegt sein und wirkt auf den Halterriemen. Bei einer zweiteiligen Bauform des Halteriemens ist der Spannhebel zweckmäßigerweise an einem Halteriementeil festgelegt und spannt das andere Halteriementeil gegen das erstgenannte. An einem Lagerende des Spannhebels ist zweckmäßigerweise ein Zahnbereich mit mindestens einem Zahn vorgesehen, der in eine Gegenzahnung am Halteriemen eingreift. Die Gegenzahnung kann beispielsweise durch die Rastvorsprünge gebildet sein. Es reicht aber aus, wenn der Spannriemen im Wirkbereich des Spannhebels eine ausreichend haft- oder reibfähige, beispielsweise strukturierte oder angerauhte, Oberfläche aufweist.

Der Spannhebel arbeitet zweckmäßigerweise im Sinne eines Ratschenantriebs, wobei er in Spannrichtung mit dem zu spannenden Riementeil in Eingriff ist, während er in zur Spannrichtung entgegengesetzten Richtung über den Halteriemen frei oder ratschend hinweg schwenkt. Dazu weist die Gegenzahnung am Halteriemen beispielsweise eine geeignete Schrägneigung auf, wobei die der Spannbewegung des Spannhebels zugeordnete Neigung steiler ist als die gegengeneigte Fläche, über die der Spannhebel bei seiner Ratschbewegung hinwegrutscht.

vorzugsweise ist der Spannhebel mit einer Sperr- oder Rastklinke kombiniert, wobei der Spannhebel zum Spannen des Halteriemens vorgesehen ist, während die Rastklinke den Riemen in seiner jeweiligen gespannten Stellung reibschlüssig oder verrastend festlegt.

Der Zahnbereich des Spannhebels kann durch einen einzigen Zahn gebildet sein. Vorzugsweise ist der Zahnbereich an einem Lagerende des Spannhebels angeordnet, vor den ein einen Betätigungsabschnitt aufweisender Hebelarm vorsteht.

Das Spannband oder der Halteriemen ist vorzugsweise an einem fest am Ladegestell vorgesehenen Winkel oder sonstigen Halter befestigt. Es versteht sich, dass dieser Halter auch klappbar oder schwenkbar sein kann, so dass er in der Nichtgebrauchsstellung möglichst wenig Platz beansprucht.

Mindestens ein Ende des Halteriemens, zweckmäßigerweise beide Enden des Halteriemens, ist bzw. sind zweckmäßigerweise an einem Schwenkhalterteil festgelegt, das am Ladegestell-Lagerbereich schwenkbar gelagert ist. Das mindestens eine Schwenkhalterteil kann axial bezüglich seiner Schwenkachse axial verschieblich sein. Der Halteriemen ist zweckmäßigerweise von dem Schwenkhalterteil lösbar. Vorteilhaft ist der Halteriemen an dem Schwenkhalterteil längenverstellbar. Es versteht sich, dass der Halteriemen bei zweiteiliger Bauform beispielsweise auch so ausgestaltet sein kann, dass jeweils ein Halteriementeil an einem Schwenkhalterteil festgelegt ist und die beiden freien Enden der Halteriementeile zum Halten der Last miteinander verbindbar sind.

Ein alternatives Konzept kann vorsehen, dass der Halteriemen unmittelbar von einer Schwenklagerwelle durchdrungen ist, beispielsweise zur Schwenklagerung des Schwenkteils. Zweckmä-βigerweise ist der Halteriemen oder das Halteriementeil an dem Durchdringungsbereich bzw. Lagerbereich für die Schwenklagerwelle verstärkt.

Der Halteriemen oder ein Halteriementeil hat zweckmäßigerweise in seiner Längsrichtung Abschnitte mit unterschiedlicher Steifigkeit. So ist er beispielsweise in einem zum Umschlingen der zu befestigenden Last vorgesehenen Umschlingungsbereich flexibler als im Bereich seiner Anlenkung oder Festlegung am Ladegestell-Lagerbereich. Die unterschiedliche Steifigkeit kann beispielsweise durch unterschiedliche Materialstärken bewirkt sein. Zweckmäßigerweise ist der Halteriemen jedoch ein Mehrkomponentenriemen. Beispielsweise besteht der Halteriemen aus unterschiedlichen Kunststoffkomponenten.

Die Schwenkteilanordnung weist vorteilhaft mindestens zwei Schwenkteile auf, die an zwei einander gegenüberliegenden Ladegestell-Lagebereichen schwenkbar gelagert sind. In der Nichtgebrauchsstellung liegen die Schwenkteile aufeinander oder nebeneinander in einem durch das Ladegestell getrennten Aufbewahrungsraum, während Sie in der Gebrauchstellung miteinander fluchtend vor das Ladegestell vorstehen. Es ist möglich, dass die Schwenkteile korrespondierende, passende Außenkonturen aufweisen, so dass sie in der Nichtgebrauchsstellung zumindest abschnittsweise formschlüssig und somit platzsparend aufeinander zu liegen kommen.

Vorteilhaft ist jedes der Schwenkteile separat von den anderen Schwenkteilen schwenkbar. Die einander gegenüberliegenden Schwenkteile stehen vorteilhaft in der Gebrauchsstellung nach schräg unten von dem Ladegestell ab. Dadurch sind große Räder aufladbar. Vorteilhaft haben die Schwenkteile einen Schwenkwinkel von mehr 180°, so dass sie zwischen der schräg nach unten gerichteten Gebrauchsstellung in eine beispielsweise horizontale oder nach innen in den vorgenannten Aufnahmeraum des Ladegestells geklappten Zustand geschwenkte Nichtgebrauchsstellung schwenkbar sind. Der Träger baut in der Nichtgebrauchsstellung kompakt. In der Gebrauchsstellung ist ein Schwerpunkt eines auf den Schwenkteilen stehenden Fahrrades tief, nahe bei dem Ladegestell angeordnet. Zudem ist dadurch eine Sicht aus dem Kraftfahrzeug nach hinten weniger beeinträchtigt.

Vorteilhaft hat die Schwenkteilanordnung ein erstes und mindestens ein zweites Paar einander gegenüberliegend an dem Ladegestell gelagerter Schwenkteile, so dass beispielsweise zwei Fahrräder auf dem Lastenträger angeordnet werden können. Es versteht sich, dass auch weitere Paare mit Schwenkteilen vorgesehen sein können.

Die Schwenkteile sind bezüglich ihrer Schwenkachse zweckmäßigerweise axial im Wesentlichen unverschieblich festgelegt. Es ist aber auch denkbar, dass die Schwenkteile vorzugsweise zumindest außerhalb ihrer Gebrauchsstellung axial verschieblich sind. Somit können die Schwenkteile beispielsweise zum Überführen von der Gebrauchsstellung in die Nichtgebrauchsstellung axial verschoben werden, so dass sie z. B. in der Nichtgebrauchsstellung nebeneinanderliegend in dem Aufnahmeraum des Ladegestells untergebracht sind, während sie in der Gebrauchsstellung miteinander fluchten. Dann kann beispielsweise ein Fahrrad in die Rinnen der miteinander fluchtenden Schwenkteile eingestellt werden. Wenn die Schwenkteile axial nicht verschieblich sind, sondern nur geschwenkt werden, ist die Gefahr von Fehlbedienungen geringer.

Die Schwenkteile eines jeweiligen Schwenkteilpaares sind zweckmäßigerweise durch eine Koppeleinrichtung miteinander gekoppelt, beispielsweise ein Koppelelement oder ein Koppelstück. Das Koppelelement kann beispielsweise eine stabförmige Gestalt haben. Zweckmäßigerweise verläuft die Koppeleinrichtung im Wesentlichen parallel zur Schwenkachse der beiden Schwenkteile. Dabei ist es vorteilhaft, wenn die Koppeleinrichtung einen verhältnismäßig großen Abstand zur Schwenkachse aufweist. Durch die Koppeleinrichtung wird beispielsweise die Bedienung vereinfacht, weil mit einer Bedienhandlung sind sämtliche gekoppelten Schwenkteile schwenkbar sind.

Die Schwenkteile sind vorteilhaft als Schwenkflügel ausgestaltet oder enthalten Schwenkflügel, wobei jeder Schwenkflügel eine einzige Rinne, beispielsweise zur Aufnahme eines Fahrrades, aufweist. Die Schwenkflügel bestehen z.B. aus Metall und/oder Kunststoff.

Ein Schwenkteil kann z.B. mindestens zwei, insbesondere parallel verlaufende, Aufnahmerinnen für zwei oder mehr Fahrräder aufweisen. Ferner können zwei oder mehr jeweils eine Aufnahmerinne aufweisende Schwenkteile miteinander gekoppelt werden. Bereits wenn ein Fahrrad erfindungsgemäß befestigt wird, ist das Schwenkteil mit mehreren Aufnahmerinnen oder die Schwenkteilanordnung mit gekoppelten Schwenkteilen ortsfest festgelegt.

Der Ladegestell-Lagerbereich wird vorteilhaft durch ein Rohr oder einen Rohrabschnitt des Ladegestells gebildet, das von dem mindestens einen Schwenkteil umgriffen wird. Der Rohrabschnitt oder das Rohr kann durch eine Schwenklageraufnahme des jeweiligen Schwenkteils durchgesteckt sein. Vorzugsweise ist hier ein ausreichendes Spiel vorhanden, so dass die Schwenkteile leichter schwenkbar sind, auch wenn der Lastenträger beispielsweise verschmutzt ist. Auch dann ist der erfindungsgemäße Lastenträger leicht handhabbar.

Der Schwenkanschlag wird zweckmäßigerweise durch ein Ladegestellträgerteil gebildet. Der Schwenkanschlag kann auch an einem Ladegestellträgerteil angeordnet sein, das das den Ladegestell-Lagerbereich bereitstellende Rohr hält. Das Ladegestellträgerteil ist beispielsweise u-förmig und hat einen Aufnahme für das Ladegestell-Rohr. Dadurch ist eine besonders einfache Bauweise gegeben. Das Ladegestellträgerteil hat vorzugsweise mindestens eine Schwenkausnehmung, in das dass mindestens eine Schwenkteil in der Gebrauchsstellung oder Nichtgebrauchsstellung eingreift. Dadurch ist zumindest in der Gebrauchsstellung eine axiale Festlegung des Schwenkteils gegeben.

Der erfindungsgemäße Lastenträger baut zumindest in seiner Nichtgebrauchsstellung sehr kompakt, so dass er bequem transportiert und gelagert werden kann. Somit kann man den Lastenträger beispielweise auch an einem Abstellplatz für das Kraftfahrzeug lagern. Es ist aber auch möglich, den Träger beispielsweise im Gepäckabteil des Kraftfahrzeuges unterzubringen.

Neben dem vorher erläuterten Schwenkkonzept für Schwenkbauteile ist es vorteilhaft, wenn auch weitere Bauteile des Lastenträgers schwenkbar und/oder steckbar sind. So kann beispielsweise in Gebrauchsstellung vertikal stehende Stütze für Fahrräder oder sonstige Lasten, die mit dem Lastenträger transportierbar sind, als ein Steckbauteil oder auch als eine schwenkbares Stütze ausgestaltet sein.

Die vertikal Stütze oder auch sonstige Bauteile können vorzugsweise als Steckbauteile ausgestaltet sein, die in ihrer jeweiligen Gebrauchsstellung in eine Steckaufnahme am Lastenträger, insbesondere dem Ladegestell, eingesteckt sind. Weitere Steckbauteile können beispielsweise sein: Leuchten, die seitlich an das Ladegestell angesteckt werden, Befestigungsmittel und Montageteile, Beleuchtungsteile, ein Kennzeichenträger oder dergleichen. Die Steckbauteile können beispielsweise als Bestandteile einer Steckbauteilgruppe ausgestaltet sein, die in der Nichtgebrauchsstellung in einem Aufbewahrungsraum des Ladegestells angeordnet sind, beispielsweise in einem durch einen Rahmen des Ladegestells gebildeten Innenraum.

Wie bereits erläutert, ist bei dem Lastenträger vorzugsweise ein Mitnahme-Konzept verwirklicht, so dass er auch abseits des Kraftfahrzeuges gelagert und transportiert werden kann. Beispielsweise hat der Lastenträger eine Halterung zum lösbaren Anordnen an einer Anhängekupplung des Kraftfahrzeuges.

Es versteht sich, dass der Lastenträger aber auch einen festen Bestandteil des Kraftfahrzeuges bilden kann, wobei er dann zweckmäßigerweise zwischen einer nach hinten vor das Kraftfahrzeug vorstehenden Gebrauchsstellung und einer hinter oder unter einer Karosseriekontur des Kraftfahrzeugs verborgenen Nichtgebrauchsstellung schwenkbar oder verschieblich gelagert ist.

Das Be- und Entladen des Kraftfahrzeuges wird dadurch erleichtert, dass das Ladegestell zweckmäßigerweise an einer fahrzeugfest montierten Tragstruktur zwischen einer für den Fahrbetrieb des Kraftfahrzeuges vorgesehenen Fahrstellung und einer zum Be- und Entladen vorgesehenen Ladestellung schwenkbar und/oder verschieblich ist. In der Ladestellung gibt das Ladegestell einen Schwenkbereich beispielsweise für eine Heckklappe des Kraftfahrzeuges frei.

Nachfolgend wird ein Ausführungsbeispiel der Erfindung anhand der Zeichnung erläutert. Es zeigen:
- Fig. 1: einen erfindungsgemäßen Lastenträger, dessen Schwenkteile in ihre Gebrauchsstellung geschwenkt sind,
- Fig. 2: den Lastenträger gemäß Figur 1 mit nach innen in Nichtgebrauchsstellung geschwenkten Schwenkteilen,
- Fig. 3: den Lastenträger gemäß Figuren 1, 2 in einer vom Kraftfahrzeug weggeschwenkten Ladestellung,
- Fig. 4: eine erste Lastbefestigungseinrichtung des Lastenträgers etwa entsprechend einem Ausschnitt A in Figur 1,
- Fig. 5: eine zweite Lastbefestigungseinrichtung einer Variante des Lastenträgers gemäß Figur 1 etwa entsprechend dem Ausschnitt A in Figur 1,
- Fig. 6: eine Variante des Lastenträgers gemäß Figur 1 mit gekoppelten Schwenkteilen,
- Fig. 7: eine dritte Lastbefestigungseinrichtung eines weiteren Ausführungsbeispiels eines erfindungsgemäßen Lastenträgers etwa entsprechend einem Ausschnitt A in Figur 1, und
- Fig. 8: eine Variante der Lastbefestigungseinrichtung gemäß Figur 7.

Ein Ladegestell 112a eines Lastenträgers 110a für ein Kraftfahrzeug 111 ist an einer Tragstruktur 113 schwenbkar gelagert. Die Tragstruktur 113 ist z.B. an nicht dargestellten Schiebeelementen, z.B. Teleskopstangen, verschieblich an einer Karosserie 115 des Kraftfahrzeugs 111 gelagert. Die Tragstruktur 113 ist z.B. an in der Zeichnung nicht dargestellten Führungen geführt, beispielsweise Gleitführungen, Rollenführungen oder dergleichen. Das Ladegestell 112a kann z.B. in der Art einer Schublade für einen Nichtgebrauch in einen Aufnahmeraum 116 einer Karosserie 115 des Kraftfahrzeugs 111 eingeschoben werden, z.B. hinter einem Stoßfänger verborgen, so dass der Lastenträger 110a in Nichtgebrauchsstellung vor eine Außenkontur des Kraftfahrzeuges 111 nicht oder nur unwesentlich vorsteht.

Ein alternatives Befestigungskonzept sieht vor, dass die Tragstruktur 113 eine Aufnahme 114 für eine Anhängekupplung 180 des Kraftfahrzeuges 111 aufweist. Die Tragstruktur 113 und mithin der Lastenträger 110a können auf die Anhängekupplung 180 aufgesetzt und bei Nichtgebrauch von dort wieder abgenommen werden und an einem Lagerort verstaut werden.

Für Transport, z.B. nach Einschieben in den Aufnahmeraum 116 der Karosserie 115, ist es vorteilhaft, dass der Lastenträger 110a in seiner Nichtgebrauchsstellung N sehr kompakt baut. Zur platzsparenden Unterbringung des Lastenträgers 110a sind mehrere der nachfolgend in Einzelnen beschriebenen Maßnahmen vorgesehen.

Der Lastenträger 110a enthält eine Schwenkteilanordnung 117a mit Schwenkteilen 118a-118d, die zum Erweitern eines Ladebereichs 119 an dem Ladegestell 112a schwenkbar gelagert sind. Die Schwenkteile 118a-118d sind an einem Ladegestellrahmen 120 des Ladegestells 112a zwischen einer Nichtgebrauchsstellung N und einer Gebrauchsstellung G schwenkbar gelagert. Die Schwenkteile 118a-118d schwenken um horizontale, in Fahrzeuglängsrichtung 162 verlaufende Schwenkachsen 163.

In der Gebrauchsstellung G stehen die Schwenkteile 118a-118d seitlich vor das Ladegestell 112a vor und vergrößern so den Ladebereich 119. Die Schwenkteile 118a-118d stehen in der Gebrauchsstellung G in Querrichtung des Kraftfahrzeugs 111 vor das Ladegestell 112a vor.

In der Nichtgebrauchsstellung N hingegen sind die Schwenkteile 118a-118d nach innen, in einen Innenbereich des Ladegestellrahmens 120 geschwenkt. Dort ist ein Aufbewahrungsraum 121 für die Schwenkteile 118a-118d vorgesehen. Wenn die Schwenkteile 118a-118d in den Aufbewahrungsraum 121 nach innen geschwenkt sind, stehen sie nicht vor den Ladegestellrahmen 120 vor, so dass das Ladegestell 112a in den Aufnahmeraum 116 des Kraftfahrzeugs 111 eingeschoben werden kann oder bequem mitgenommen werden kann.

Auf ähnlich platzsparende Weise können Steckbauteile 122 einer Steckbauteilgruppe 123 in dem durch das Ladegestell 112a definierten Aufbewahrungsraum 121 bei Nichtgebrauch untergebracht werden. Somit sind die Schwenkteile 118a-118d und die Steckbauteile 122 jeweils platzsparend verstaubar, so dass das Ladegestell 112a in der Art einer Schublade in den Aufnahmeraum 116 des Kraftfahrzeugs 111 eingeschoben werden kann.

An vorderen freien Enden 124 der Tragstruktur 113 ist das Ladegestell 112a mit Schwenkgelenken 125 schwenkbar gelagert.

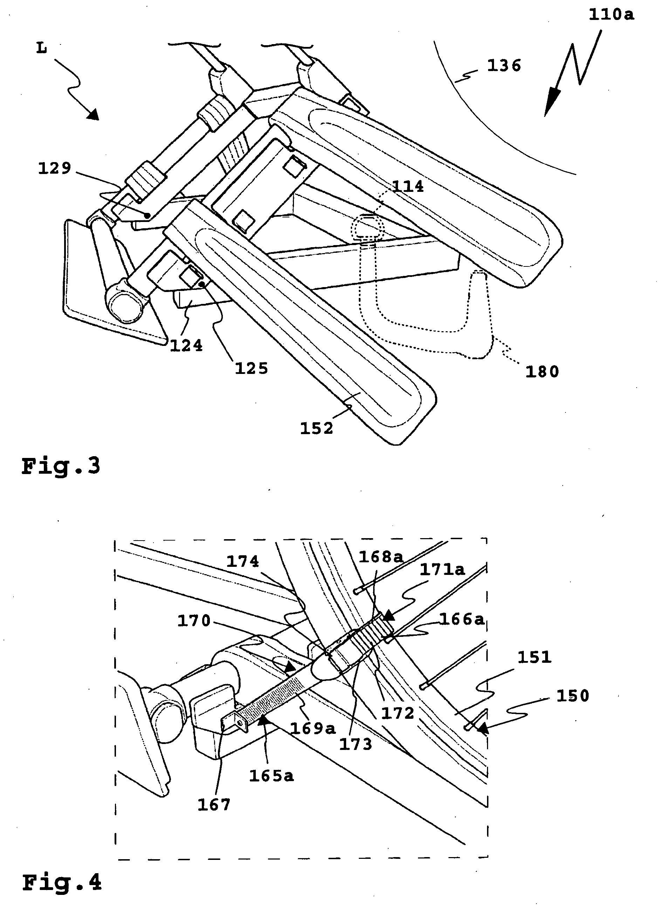

Die Schwenkgelenke 125 sind an vorderen Enden von Ladegestellträgerteilen 126a, 126b vorgesehen, die Tragrohre 127 des Ladegestells 112a halten. Beispielsweise ist ein Bolzen 129 durch die Ladegestellträgerteile 126a, 126b sowie die vorderen Enden 124 der Tragstruktur 113 durchgesteckt. Wenn das Ladegestell 112a in eine Ladestellung L geschwenkt ist (Figur 3), gibt es einen Schwenkbereich 136 beispielsweise für eine Heckklappe des Kraftfahrzeuges 111 frei.

Die Ladegestellträgerteile 126a, 126b können zumindest abschnittsweise miteinander verbunden sein, so dass eine u-förmige Gestalt entsteht.

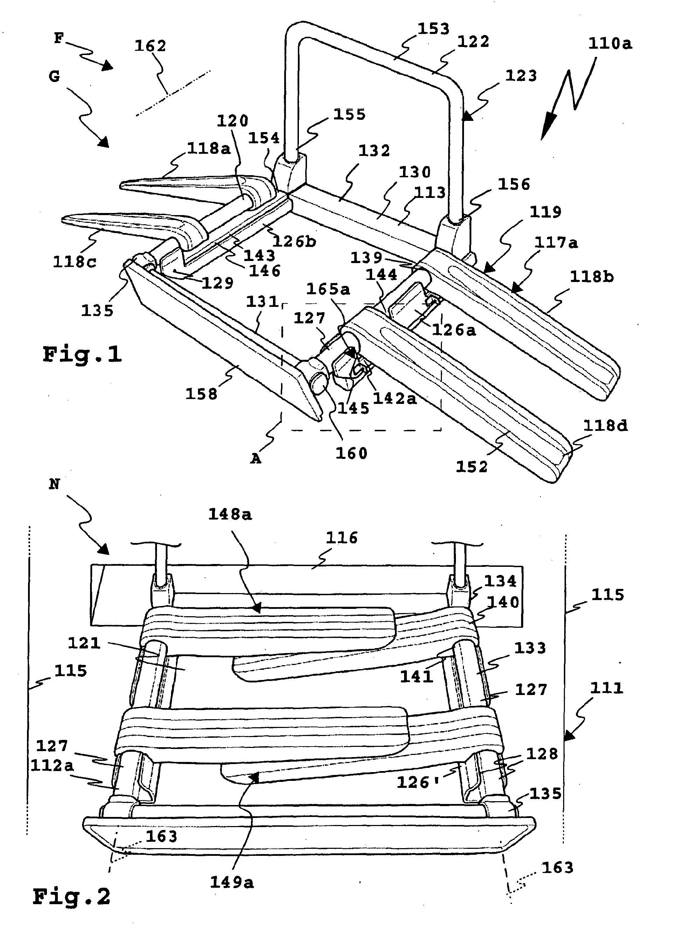

Dies ist beispielsweise bei einem alternativen Ladegestell-Konzept, dass in Figur 2 angedeutet ist, der Fall. Dort halten Ladegestellträgerteile 126', die u-förmig sind, die Tragrohre 127. Die Tragrohre 127 sind beispielsweise zwischen nach oben vor einen Bodenabschnitt vorstehenden Schenkeln 128 der Ladegestellträgerteile 126' aufgenommen. Die Schenkel 128 sind an Ihrem oberen Endbereich vorzugsweise etwas enger ausgestaltet, so dass sie seitlich an den Tragrohren 127 anliegen.

Die Ladegestellträgerteile 126a, 126b sind mit Hilfe von Verbindungselementen 134 mit einem Querträger 130 miteinander verbunden, so dass die Tragstruktur 113 im Wesentlichen u-förmig ist. Auch das schwenkbare Ladegestell 112a hat eine u-förmig Gestalt. Die in Fahrzeuglängsrichtung 162 verlaufenden Tragrohre 127 sind mittels eines in Fahrzeugquerrichtung verlaufenden Querträgers 131 miteinander verbunden. Beispielsweise sind die Tragrohre 127 sowie der Querträger 131, der vorzugsweise ebenfalls als ein Rohr ausgestaltet ist, in die verbindungselemente 135 eingesteckt. Die Verbindungselemente 134, 135 sind vorzugsweise Kunststoffteile.

Die Tragstruktur 113 und das Ladegestell 112a sind beide u-förmig, wobei deren jeweilige Schenkel in der Fahrstellung F aufeinander liegen und die beiden in Fahrzeugquerrichtung verlaufenden Querabschnitte, die durch die Querträger 130, 131 gebildet sind, an einander entgegengesetzten Seiten der Schenkel angeordnet sind, so dass zumindest in der Fahrstellung F eine im Wesentlichen rechteckige Gestellanordnung gebildet ist. Auch diese Maßnahme trägt dazu bei, dass der Lastenträger 110a kompakt baut und dennoch eine hohe Stabilität aufweist.

In der Fahrstellung F sitzen die Ladegestellträgerteile 126a, 126b reiterartig auf in Fahrzeuglängsrichtung 162 verlaufenden Trägern 154 der Tragstruktur 113 auf. Ferner liegen die Tragrohre auf den Trägern 154 auf, so dass für den Fahrbetrieb des Kraftfahrzeugs 11 eine stabile Konstruktion erzielt ist.

Während der Querträger 130 beispielsweise einen rechteckigen Querschnitt hat, sind die Außenkonturen 132 der Tragrohre 127 zumindest außenseitig kreisrund.

Die Lagerbereiche 139 des Ladegestells 112a sind an den Außenkonturen der Tragrohre 127 vorgesehen. Die Tragrohre 127 bilden sozusagen Lagerachsen, die Schwenkteilenden 140 der Schwenkteile 118a-118d durchdringen. Die Schwenkteilenden 140 sind hülsenartig.

Zwischen Schwenklageraufnahmen 141 an den Schwenkteilenden 140 und den Tragrohren 127 ist ein verhältnismäßig großes Spiel vorhanden, so dass die Schwenkteile 118a-118d auch bei Verschmutzung leicht geschwenkt werden können. Die Schwenkteile 118a-118d sind zwischen Schwenkanschlägen 142a für die Gebrauchsstellung G und 143 für die Nichtgebrauchsstellung N schwenkbar. Die Schwenkanschläge 142a werden durch die Ladegestellträgerteile 126a bereitgestellt, die Schwenkanschläge 143 durch die Ladegestellträgerteile 126b. Die Schwenkanschläge 142a, 143 sind derart ausgestaltet, dass die Schwenkteile 118a-118d mit einem Schwenkwinkel schwenkbar sind, der größer als 180° ist. So stehen die flügelartigen Schwenkteile 118a-118d im Wesentlichen horizontal, wenn sie in den Aufnahmeraum 116 in ihre Nichtgebrauchsstellung N geschwenkt sind. In ihrer Gebrauchsstellung G hingegen stehen die Schwenkteile 118a-118d nach schräg unten vor das Ladegestell 112a vor. Jedenfalls sind die Schwenkanschläge 142a derart angeordnet, dass diese zur Aufnahme von beispielsweise großen Fahrrädern vorteilhafte Lage der Schwenkteile 118a-118d möglich ist.

Die Schwenkanschläge 142a sind durch Bodenabschnitte von Schwenkausnehmungen 144 an den Ladegestellträgerteilen 126a vorgesehen. Die Schwenkausnehmungen 144 haben ferner Seitenanschläge 145, die ein axiales Verschieben der Schwenkteile 118a-118d entlang ihrer Schwenkachsen 163 begrenzen. Die Schwenkachsen 163 verlaufen in Fahrzeuglängsrichtung 162 und werden durch die Tragrohre 127 definiert. Die axiale Festlegung bezüglich der Schwenkachsen 163 erleichtert das Zusammenfalten des Lastenträgers 110a in seine Nichtgebrauchsstellung N, weil dann die Schwenkteile 118a-118d miteinander fluchtend in dem Aufbewahrungsraum 121 angeordnet sind.

Die Schwenkteile 118a-118d liegen in der Nichtgebrauchsstellung N aufeinander, wobei das jeweils untere Schwenkteil 118a-118d an dem jeweiligen Schwenkanschlag 143 anliegt, während das andere Schwenkteil 118a-118d auf dem am Schwenkanschlag 143 anliegenden Schwenkteil 118a-118d aufliegt. Dabei ist es gleichgültig, welches der Schwenkteile 118a-118d das jeweils untere Schwenkteil ist, weil beispielsweise abweichend von der Konfiguration gemäß Figur 2 auch die Schwenkteile 118a und/oder 118c die unteren Schwenkteile sein können.

Der Schwenkanschlag 143 ist als eine Längsausnehmung 146 ausgestaltet, die sich von einem vorderen, das jeweilige Tragrohr 127 haltenden und nach oben vorstehenden Ende zum freien Ende der Tragrohre 127 hin erstreckt.

Die Schwenkteile 118a-118d sind paarweise gruppiert, wobei die Schwenkteile 118a und 118c ein erstes Schwenkteil-Paar 148a bilden und die am gegenüberliegenden Tragrohr 127 schwenkbar gelagerten Schwenkteile 118b, 118d ein zweites Schwenkteil-Paar 149a bilden.

Die Schwenkteile 118a-118d sind in der Art von Flügeln ausgestaltet, wobei die Schwenkteilenden 140 die jeweiligen Lagerbereiche der Schwenkteile 118a-118d bilden. Vorzugsweise bestehen die Schwenkteile 118a-118d aus Kunststoff und/oder Metall, vorzugsweise Leichtmetall, z.B. Aluminium oder dergleichen. Die Schwenkteile 118a-118d weisen jeweils eine Rinne 152 zur Aufnahme von Fahrrädern auf.

Fahrräder können zum durch nicht dargestellte Klemmen, Riemen oder dergleichen zudem an einem bei Gebrauch vertikal stehenden Haltebügel 153 befestigt werden. Die Klemmen oder Riemen sind beispielsweise an einem oberen Querabschnitt des Haltebügels 153 lösbar befestigbar. Freie Enden des u-förmigen Haltebügels 153 sind in Steckaufnahmen 156 des Ladegestells 112a eingesteckt. Vorliegend sind die Steckaufnahmen 156 beispielsweise an den Verbindungselementen 134 vorgesehen. Alternativ wäre es denkbar, dass der Haltebügel 153 als ein Schwenkbauteil ausgestaltet ist, so dass er beispielsweise in der Nichtgebrauchsstellung N nach unten klappbar ist, wobei dann seitliche Schenkel des Haltebügels 153 neben den Tragrohren 127 verlaufen.

Die Schwenkfestlegung der Schwenkteile 118a-118d gestaltet sich ausgesprochen einfach:
Zur Befestigung einer Last 150, beispielsweise eines Fahrrades 151 dienen Lastbefestigungseinrichtungen 165a, die zugleich die Schwenkteile 118a-118d schwenkfest festlegen. Die Last 150 wird auf die in Gebrauchsstellung G ausgeschwenkten Schwenkteile 118a-118d aufgestellt und mit den Lastbefestigungseinrichtungen 165a befestigt, die über die mit ihnen befestigte Last 150 zugleich die Schwenkteile 118a-118d schwenkfest festlegen.

Die Lastbefestigungseinrichtungen 165a enthalten Halteriemen 166a mit an Halterungen 167 befestigten Halteriementeilen 168a, 169a zum Umschlingen der Last 150, beispielsweise zum Umschlingen einer Fahrrad-Felge. Somit bilden die Lastbefestigungseinrichtungen 165a Umgreifeinrichtungen 170 zum Umgreifen der Last 150.

Die Halterungen 167 stehen vor das Ladegestell 112a in Richtung der in die Gebrauchsstellung G ausgeschwenkten Schwenkteile 118a-118d vor.

Die Halterungen 167 sind beispielsweise Winkelstücke, die an den Ladegestellträgerteilen 126a im Bereich der Schwenkanschläge 142a angeordnet sind, vorwiegend zweckmäßigerweise unterhalb der Schwenkanschläge 142a. Somit umschlingen die Halteriemen 166a nicht nur die Last 150, sondern auch die in die Gebrauchsstellung G geschwenkten Schwenkteile 118a-118d.

Die Last 150 ist mit den Lastbefestigungseinrichtungen 165a an dem Lastenträger 110a verspannbar, so dass die Lastbefestigungseinrichtungen 165a Spanneinrichtungen 171a bilden. An dem Halteriementeil 168a sind dazu Zahnungen bzw. Rastvorsprünge 172 vorhanden, in die eine vorzugsweise mit Hilfe einer Feder in Ihre Haltestellung vorgespannte Rastklinke 173 am anderen Halteriementeil 169a eingreift. Die Rastvorsprünge 172 werden in eine schließenartige Rastaufnahme 174 eingesteckt, wo die zweckmäßigerweise in ihre Raststellung federbelastete Rastklinke 173 in die Rastvorsprünge 172 rastend eingreift. Beispielsweise durch Ziehen am freien Ende des die Rastklinke 173 durchdringenden Halteriementeils 168a können die Halteriemen 166a gespannt werden, so dass zugleich die Schwenkteile 118a-118d in ihre jeweilige Gebrauchsstellung G gespannt sind.

Der Haltebügel 153 sowie z.B. nicht dargestellte Leuchten bilden die Steckbauteile 122. Die Leuchten sind z.B. in Steckaufnahmen 160 einsteckbar. Die Steckaufnahmen 160 sind beispielsweise seitlich offene, in der Zeichnung z.B. durch Stopfen verschlossene Enden des Querträgers 131. Die Leuchten stehen dann nach hinten seitlich vor die Tragrohre 127 vor.

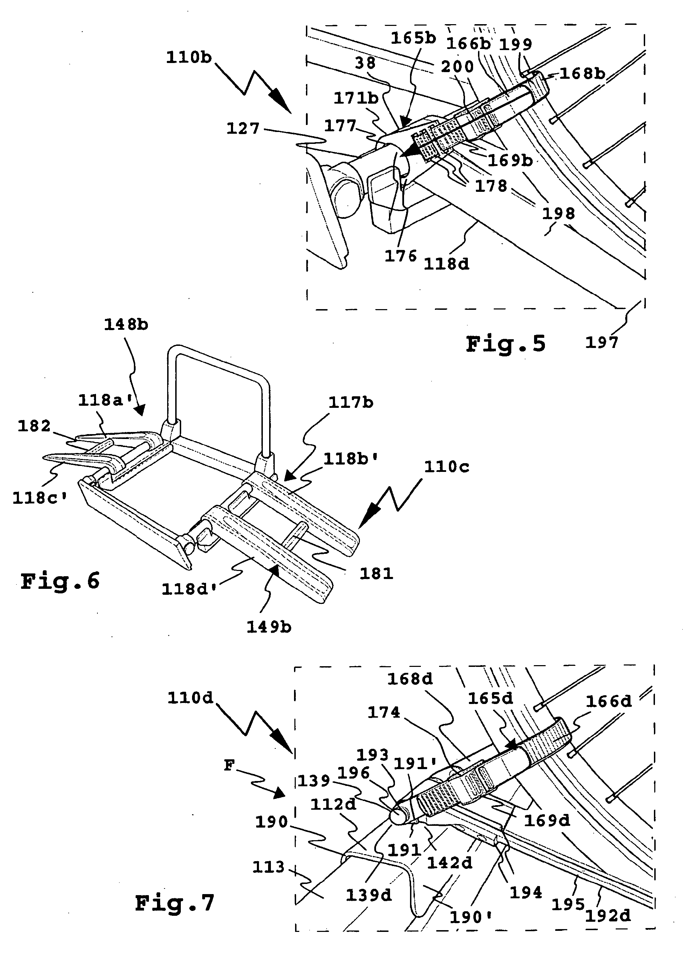

Ein zweites Ausführungsbeispiel eines erfindungsgemäßen Lastenträgers mit erfindungsgemäßen Lastbefestigungseinrichtungen ist in Figur 5 dargestellt. Bei dem dort gezeigten Lastenträger 110b sind Halteriemen 166b an Schwenkhalterteilen 176 festgelegt. Die Schwenkhalterteile 176 sind schwenkbar an der Tragstruktur 113 gelagert. Die Schwenkhalterteile 176 weisen Schwenkausnehmungen 177 auf, die von den Tragrohren 127 durchdrungen sind.

Halteriementeile 168b, 169b sind an den Schwenkhalterteilen 176 längenverstellbar. Die Schwenkhalterteile 176 weisen Durchschlingungsausnehmungen 178 auf, durch die die Halteriemen 166b durchgeschlungen sind. Ferner sind die Halteriementeile 168b, 169b vorteilhaft gegeneinander spannbar.

Die Schwenkhalterteile 176 bestehen zweckmäßigerweise aus Metall. Somit sind die Lastbefestigungseinrichtungen 165b im Bereich ihrer Lagerung an der Tragstruktur 113 verstärkt.

Bei einem in Figur 6 dargestellten Lastenträger 110c, dessen grundsätzlicher Aufbau dem Lastenträger 110a entspricht, sind Schwenkteile 118a'-118d' durch Koppeleinrichtungen 181 miteinander verbunden. Die Koppeleinrichtungen 181 enthalten Koppelelemente 182, die jeweils die Schwenkteile 118a'-118d' der einander gegenüberliegenden Schwenkteilpaare 148b, 149b koppeln. Wenn eine Last auf nur zwei einander gegenüberliegender Schwenkteile 118a', 118b' oder 118c', 118d' aufliegt und durch die eine Lastbefestigungseinrichtung, z.B. die Lastbefestigungseinrichtung 165a oder 165b, befestigt ist, sind bereits beide Schwenkteilpaare 148b, 149b und somit die gesamte Schwenkteilanordnung 117b schwenkfest festgelegt.

Ein Lastenträger 110d gemäß Figur 7 hat ein Ladegestell 112d mit U-förmigen Trägerprofilen 190. Die Trägerprofile 190 sitzen in der Fahrstellung F (in der Zeichnung dargestellt) auf der Tragstruktur 113 auf. Beispielsweise umgreifen seitliche Schenkel 190' der U-Trägerprofile 190 die Tragstruktur 113.

An den Trägerprofilen 190, die korrespondierend zu den Tragrohren 127 verlaufen, sind Lageraufnahmen 191, beispielsweise an aufgekanteten Laschen 191', durchgesteckten Laschen oder dergleichen, angeordnet, an denen Schwenkteile 192d schwenkbar gelagert sind. Bolzen 193 sind durch Lagerteile 194 durchgesteckt und lagern diese schwenkbar. Die Lagerteile 194 halten jeweils ein Rinnenprofil 195. Anstelle der zweiteiligen Bauweise mit Lagerteil 194 und Rinnenprofil 195 wäre auch eine einstückige Bauart der Schwenkteile 192d möglich. Der Bolzen 193 bildet eine Schwenklagerwelle 196. Im ausgeschwenkten Zustand, der Figur 7 dargestellt ist, liegen die Schwenkteile 192d auf einem Schwenkanschlag 142d der Tragstruktur 113 auf.

Halteriemen 166d von Lastbefestigungseinrichtungen 165d mit Halteriementeilen 168d, 169d werden unmittelbar von der Schwenklagerwelle 196 durchdrungen.

Bei den Lastenträgern 110a - 110d ist jeweils vorgesehen, dass die Schwenkteile 118a einen Auflagebereich 197 zum Auflegen der Last 150, beispielsweise des Fahrrades 151 bereitstellen, der vom Schwenkteil-Lagerbereich 38 einen Abstand 198 aufweist, z.B. in Figur 5 dargestellt. Mithin wird also die Last 150 nicht unmittelbar am Lagerbereich 38, sondern davon beabstandet auf den jeweiligen Schwenkteilen aufgelegt. Am Lagerbereich 38 sind die Lastbefestigungseinrichtungen 165a, 165b und 165d jeweils angelenkt und greifen an der jeweiligen Last 150, 151 an einem von Auflagebereich 197 entfernten Haltebereich 199 an. Dadurch ist zwischen dem Haltebereich 199, dem Auflagebereich 197 sowie dem Lagerbereich 38 jeweils ein Abstand vorhanden. Beispielhaft ist ein Kraftvektor 200 entsprechend der Kraft des Halteriemens 166a, 166b, 166d eingezeichnet.

Die Riemenkraft 200 hat eine in Fahrzeugquerrichtung, d.h. zur Fahrzeugmitte verlaufende Kraftkomponente, sowie eine vertikale, in Z-Richtung verlaufende Kraftkomponente.

Prinzipiell wäre es möglich, die Last 150/das Fahrrad 151 bzw. dessen Felge auch im Bereich des Auflagebereichs 197 bzw. Aufstandspunkt an dem Schwenkteil 118a - 118d anzubringen. Dann wäre die horizontale Kraftkomponente allerdings 0.

Ein Lastenträger 110e entspricht im Wesentlichen dem Lastenträger 110d. Schwenkteile 192e sind im Gegensatz zu den Schwenkteilen 192d einteilig, das heißt sie haben integrierte Lagerenden, die an den Bolzen 193 schwenkbar gelagert sind. Ebenfalls schwenkbar sind an den Bolzen 193 Halteriemen 166e von Lastbefestigungseinrichtungen 165e gelagert. Beidseits der Schwenkteile 192 ist jeweils ein Halteriementeil 168e, 169e schwenkbar an den Bolzen 193 gelagert.

Am Halteriementeil 169e ist eine Spannaufnahme zum Verrasten und Spannen des anderen Halteriementeils 168e vorgesehen. Das freie Ende des Halteriementeils 168e wird um das zu haltende Rad (nicht dargestellt) herumgeschlungen und in die Spannaufnahme 201 eingesteckt. An der Spannaufnahme 201 ist eine Sperr- oder Rastklinke 202 schwenkbar an einem Lagerteil 203 gelagert. Das Lagerteil 203 ist U-förmig und hat etwa die Breite des Halteriementeils 168e, so dass dieses zwischen zwei Seitenschenkeln, an denen die Rastklinke 202 schwenkbar gelagert ist, in die Spannaufnahme 201 eingesteckt werden kann. Dort verrastet die Rastklinke 202 mit einer durch Rastzähne gebildete Gegenzahnung 204 am Halteriementeil 168e.

Zweckmäßigerweise ist die Rastklinke 202 in Richtung ihrer Raststellung federbelastet, so dass sie selbsttätig mit der Gegenzahnung 204 verrastet.

Nun wäre es prinzipiell möglich, das Halteriementeil 168 durch Ziehen an seinem freien, durch die Spannaufnahme 201 durchgesteckten Ende zu spannen. Bei der eine Spanneinrichtung 171e bildenden Lastbefestigungseinrichtung 165e hingegen ist ein anderes Konzept gewählt:

Die Spanneinrichtung 171e hat nämlich einen Spannhebel 205, der ebenfalls an dem Lagerteil 203 schwenkbar gelagert ist. Die Rastklinke 202 und der Spannhebel 205 sind in Durchsteckrichtung des Halteriementeils 168e hintereinander angeordnet. Während die Rastklinke 202 für einen festen, verrasteten Halt des Halteriementeils 168e am Halteriementeil 169e sorgt, kann das Halteriementeil 168e gegen das Halteriementeil 169e mittels des Spannhebels 205 zusätzlich gespannt werden.

An einem Lagerende 206 des Spannhebels 205 ist ein Spannvorsprung 207 angeordnet, der in die Gegenzahnung 204 eingreift. Wird nunmehr der Spannhebel 205 durch eine Spann-Schwenkbewegung in Richtung eines Pfeils 208 geschwenkt, greift der Spannvorsprung 207 in die Gegenzahnung 204 ein und fördert das Halteriementeil 168e in Spannrichtung, das heißt zu der Rastklinke 202 hin. Diese rutscht während der Spannbewegung oder Förderbewegung des Spannhebels 204 über die Gegenzahnung 204 weg und rastet am Ende der Spannbewegung in eine passende Ausnehmung der Gegenzahnung 204 ein, so dass das Halteriementeil 168e enger an die zu befestigende Last heran gespannt ist. Bei der Rückwärtsbewegung des Spannhebels 205 entgegen seiner Spannrichtung, etwa in Richtung eines Pfeils 209 rutscht der Spannvorsprung 207 über die Gegenzahnung 204 weg, so dass insgesamt eine Ratschbewegung gebildet ist.

Der Bediener kann den Spannhebel 205 bequem an dessen Hebelarm 210 ergreifen, so dass eine verhältnismäßig große Spannkraft zur Verfügung steht.

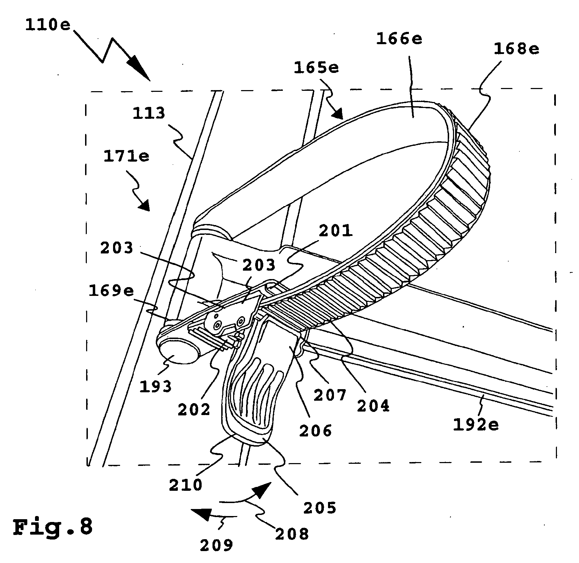

Wenn der Spannhebel 205 über die in Figur 8 dargestellte Stellung weiter in Richtung 209 geschwenkt wird, gibt er die Gegenzahnung 204 frei, so dass das Halteriementeil 168e aus der Spannaufnahme 201 zum Öffnen der Lastbefestigungseinrichtung 165e ausziehbar ist.

Beim letzten Schwenk-Spannhub des Spannhebels 205 wird der Hebelarm 210 an die Gegenzahnung 204 herangeschwenkt, so dass der Hebelarm 210 nicht mehr wie in Figur 8 dargestellt seitlich absteht.

## Patentansprüche

1. Lastenträger für ein Kraftfahrzeug (111), insbesondere einen Personenkraftwagen, mit einem zum Tragen einer Last (150) vorgesehenen Ladegestell (112a; 112d), das in einer Arbeitsstellung des Lastenträgers (110a-110e) nach hinten vor einen Heckbereich des Kraftfahrzeugs (111) vorsteht und einen Ladebereich (119) zum Aufladen einer Last (150) bereitstellt, mit einer Schwenkteilanordnung (117a; 117b) mit mindestens einem Schwenkteil (118a-118d; 192d; 192e; 118a' -d') zum Erweitern des Ladebereichs (119), wobei das mindestens eine Schwenkteil (118a-118d; 192d; 192e; 118a'-d') mit einem Schwenkteil-Lagerbereich (38) an einem Ladegestell-Lagerbereich (139) des Ladegestells (112a; 112d) um eine Schwenkachse (63) zwischen einer Gebrauchsstellung (G) und einer Nichtgebrauchsstellung (N) schwenkbeweglich gelagert ist, wobei an dem Ladegestell-Lagerbereich (139) ein Schwenkanschlag (142a; 142d) angeordnet ist, gegen den das mindestens eine Schwenkteil (118a-118d; 192d; 192e; 118a'-d') in der Gebrauchsstellung (G) anschlägt, und wobei an dem Ladegestell (112a; 112d) am Ladegestell-Lagerbereich (139) mindestens eine Lastbefestigungseinrichtung (165a; 165b; 165d) zum Befestigen-einer auf dem mindestens einen Schwenkteil (118a-118d; 192d; 192e; 118a'-d') angeordneten Last (150) festgelegt ist, wobei die mindestens eine Lastbefestigungseinrichtung (165a; 165b; 165d) durch Halten der mit ihr befestigten Last (150) das mindestens eine Schwenkteil (118a-118d; 192d; 192e; 118a'-d') schwenkfest festlegt, **dadurch gekennzeichnet, dass** die mindestens eine Lastbefestigungseinrichtung (165a; 165b; 165d) an einander entgegengesetzten Seiten des mindestens einen Schwenkteils (118a-118d; 192d; 192e; 118a'- d') an dem Ladegestell (112a; 112d) festgelegt ist.

2. Lastenträger nach Anspruch 1, **dadurch gekennzeichnet, dass** die Lastbefestigungseinrichtung (165a; 165b; 165d) eine Spanneinrichtung (171a-171e) zum Verspannen der Last (150) an dem Ladegestell (112a; 112d) enthält oder bildet.

3. Lastenträger nach Anspruch 1 oder 2, **dadurch gekennzeichnet, dass** die mindestens eine Lastbefestigungseinrichtung (165a; 165b; 165d) innerhalb eines Schwenkbereichs des mindestens einen Schwenkteils (118a-118d; 192d; 192e; 118a'-d') nahe bei dem Schwenkanschlag (142a; 142d) und/oder außerhalb eines Schwenkbereichs des mindestens einen Schwenkteils (118a-118d; 192d; 192e; 118a' -d' ) an dem Ladegestell (112a; 112d) festgelegt ist.

4. Lastenträger nach einem der vorhergehenden Ansprüche, **dadurch gekennzeichnet, dass** das mindestens eine Schwenkteil (118a-118d; 192d; 192e; 118a'-d' ) einen Auflagebereich (197) zum Auflegen der Last (150), insbesondere ein Aufstellbereich für ein Fahrrad (151), einen Abstand (198) von dem Schwenkteil-Lagerbereich (38) aufweist, und dass die mindestens eine Lastbefestigungseinrichtung (165a; 165b; 165d) die Last (150) an einem von dem Auflagebereich (197) entfernten Haltebereich (199) angreift.

5. Lastenträger nach einem der vorhergehenden Ansprüche, **dadurch gekennzeichnet, dass** die mindestens eine Lastbefestigungseinrichtung (165a; 165b; 165d) eine Umgreifeinrichtung (170) zum Umgreifen der Last (150), insbesondere einer Felge eines Fahrrades (151), aufweist, wobei die Umgreifeinrichtung (170) das mindestens eine Schwenkteil (118a-118d; 192d; 192e; 118a' -d') vorzugsweise dann umgreift, wenn das mindestens eine Schwenkteil (118a-118d; 192d; 192e; 118a'-d') in seiner Gebrauchsstellung ist.

6. Lastenträger nach Anspruch 5, **dadurch gekennzeichnet, dass** die Umgreifeinrichtung (170) die Last (150) an einem Haltebereich (199) umgreift, der von einem Auflagebereich (197) zum Auflegen der Last (150) entfernt ist.

7. Lastenträger nach einem der Ansprüche 5 oder 6, **dadurch gekennzeichnet, dass** die Umgreifeinrichtung (170) einen Umgreifbügel oder einen Umgreifhaken zum Umhaken der Last oder einen Halteriemen (166a; 166b; 166d; 166e), insbesondere einen Spannriemen, zum Umschlingen der Last (150) umfasst, wobei der Halteriemen (166a; 166b; 166d; 166e) insbesondere mindestens zwei Halteriementeile (168a-e, 169a-e) umfasst.

8. Lastenträger nach Anspruch 7, **dadurch gekennzeichnet, dass** er eine Rastaufnahme (174) zum Verrasten mit Rastvorsprüngen (172) an einem Halteriemen (166a; 166b; 166d; 166e) oder einem Halteriementeil (168a-168e) aufweist.

9. Lastenträger nach Anspruch 7 oder 8, **dadurch gekennzeichnet, dass** er einen Spannhebel (205) zum Spannen des Halteriemens (166a; 166b; 166d; 166e), insbesondere der Halteriementeile (168a-e, 169a-e) gegeneinander, umfasst, wobei der Spannhebel (205) insbesondere einen Zahnbereich zum Eingriff in eine Gegenzahnung (204) an einem Halteriemen (166a; 166b; 166d; 166e) aufweist.

10. Lastenträger nach Anspruch 9, **dadurch gekennzeichnet, dass** der Spannhebel (205) im Sinne eines Ratschenantriebs ausgestaltet ist, wobei der Spannhebel (205) in Spannrichtung mit dem zu spannenden Halteriemen (166a; 166b; 166d; 166e) in Eingriff ist, während er in zur Spannrichtung entgegengesetzten Richtung über den Halteriemen (166a; 166b; 166d; 166e) frei oder ratschend weg schwenkt.

11. Lastenträger nach Anspruch 9 oder 10, **dadurch gekennzeichnet, dass** dem Spannhebel (205) eine Sperrklinke (202) zum Halten des durch den Spannhebel (205) bei einem Spannhub in Richtung der Sperrklinke (202) geförderten Halteriemens (166a; 166b; 166d; 166e) zugeordnet ist.

12. Lastenträger nach einem der Ansprüche 7 bis 11, **dadurch gekennzeichnet, dass** der Halteriemen (166a; 166b; 166d; 166e) an mindestens einem Ende an einem am Ladegestell-Lagerbereich (139) schwenkbar gelagerten Schwenkhalterteil (176) festgelegt ist und/oder dass der Halteriemen (166a; 166b; 166d; 166e) von einer Schwenklagerwelle (196) durchdrungen wird.

13. Lastenträger nach einem der Ansprüche 7 bis 12, **dadurch gekennzeichnet, dass** der Halteriemen (166a; 166b; 166d; 166e) in seiner Längsrichtung Abschnitte mit unterschiedlicher Steifigkeit aufweist, insbesondere aus Kunststoffkomponenten mit unterschiedlicher Steifigkeit bestehende Abschnitte.

14. Lastenträger nach einem der vorhergehenden Ansprüche, **dadurch gekennzeichnet, dass** das mindestens eine Schwenkteil (118a-118d; 192d; 192e; 118a'-d') mindestens eine Rinne (52), insbesondere zur Aufnahme eines Fahrrads (151), aufweist.

15. Lastenträger nach einem der vorhergehenden Ansprüche, **dadurch gekennzeichnet, dass** das mindestens eine Schwenkteil (118a-118d; 192d; 192e; 118a'-d') bezüglich seiner Schwenkachse (163) axial im Wesentlichen unverschieblich festgelegt ist.

16. Lastenträger nach einem der vorhergehenden Ansprüche, **dadurch gekennzeichnet, dass** die Schwenkteilanordnung (117a; 117b) mindestens zwei Schwenkteile (118a-118d; 192d; 192e; 118a'-d') aufweist, die an zwei einander gegenüberliegenden Ladegestell-Lagerbereichen (139) schwenkbar gelagert sind, und dass die mindestens zwei Schwenkteile (118a-118d; 192d; 192e; 118a'-d') in der Nichtgebrauchsstellung (N) aufeinander oder nebeneinander in einem durch das Ladegestell (112a; 112d) begrenzten Aufbewahrungsraum (121) angeordnet sind und in der Gebrauchsstellung (G) miteinander fluchtend vor das Ladegestell (112a; 112d) vorstehen, insbesondere dass die einander gegenüberliegenden Schwenkteile (118a-118d; 192d; 192e; 118a'-d') in der Gebrauchsstellung (G) nach schräg unten von dem Ladegestell (112a; 112d) abstehen.

17. Lastenträger nach einem der vorhergehenden Ansprüche, **dadurch gekennzeichnet, dass** die Schwenkteilanordnung (117a; 117b) ein erstes und mindestens ein zweites Paar (148a, 149a; 148b, 149b) einander gegenüberliegend an dem Ladegestell (112a; 112d) gelagerter Schwenkteile (118a-118d; 192d; 192e; 118a'-d') aufweist, wobei die Schwenkteile (118a - 118d) mindestens eines der Schwenkteil-Paare (148a, 149a; 148b, 149b) individuell schwenkbar oder durch eine Koppeleinrichtung (181) gekoppelt sind.

18. Lastenträger nach einem der vorhergehenden Ansprüche, **dadurch gekennzeichnet, dass** das mindestens eine Schwenkteil (118a-118d; 192d; 192e; 118a'-d') als ein Schwenkflügel ausgestaltet ist, und dass das Schwenkteil (118a-118d; 192d; 192e; 118a'-d') eine einzige Rinne (52, 161) aufweist.

19. Lastenträger nach einem der vorhergehenden Ansprüche, **dadurch gekennzeichnet, dass** der Ladegestell-Lagerbereich (139) an einem Rohr (127) des Ladegestells vorgesehen ist, das von dem mindestens einen Schwenkteil (118a-118d; 192d; 192e; 118a'-d') umgriffen wird oder das durch eine Schwenklageraufnahme (141) des mindestens einen Schwenkteils (118a-118d; 192d; 192e; 118a'-d') durchgesteckt ist, wobei der Schwenkanschlag (142a; 142d) vorzugsweise an einem das Rohr (127) haltenden, insbesondere u-förmigen, Ladegestellträgerteil (126a, 126b, 126') angeordnet ist.

20. Lastenträger nach einem der vorhergehenden Ansprüche, **dadurch gekennzeichnet, dass** er mindestens eine Steckaufnahme (156) für mindestens ein Steckbauteil (122) aufweist, das für eine Gebrauchsstellung (G) in die mindestens eine Steckaufnahme (156) eingesteckt ist, wobei das mindestens eine Steckbauteil (122) insbesondere eine Stütze umfasst, die in der Gebrauchsstellung (G) nach oben vor das Ladegestell (112a; 112d) vorsteht, und/oder insbesondere eine Leuchte umfasst, die in der Gebrauchsstellung (G) an dem Ladegestell (112a; 112d) oder einem Schwenkteil (118a-118d; 192d; 192e; 118a'-d') angeordnet ist.

21. Lastenträger nach Anspruch 20, **dadurch gekennzeichnet, dass** das mindestens eine Steckbauteil (122) einen Bestandteil einer Steckbauteilgruppe (123) bildet, die in der Nichtgebrauchsstellung (N) einem Aufbewahrungsraum (121) des Ladegestells (112a; 112d) anordenbar ist.

22. Lastenträger nach einem der vorhergehenden Ansprüche, **dadurch gekennzeichnet, dass** er eine Halterung zum lösbaren Anordnen an einer Anhängekupplung (180) des Kraftfahrzeugs (111) aufweist und/oder dass das Ladegestell (112a; 112d) an dem Kraftfahrzeug (111) zwischen einer nach hinten vor das Kraftfahrzeug (111) vorstehenden Gebrauchsstellung (G) und einer hinter oder unter einer Karosseriekontur des Kraftfahrzeugs (111) verborgenen Nichtgebrauchsstellung (N) schwenkbar und/oder verschieblich gelagert ist.

23. Lastenträger nach einem der vorhergehenden Ansprüche, **dadurch gekennzeichnet, dass** das Ladegestell (112a; 112d) an einer Tragstruktur (113) zwischen einer für einen Fahrbetrieb des Kraftfahrzeugs (111) vorgesehenen Fahrstellung (F) und einer zum Be- und Entladen des Kraftfahrzeugs (111) vorgesehenen Ladestellung (L) schwenkbar und/oder verschieblich gelagert ist, und dass das Ladegestell (112a; 112d) in der Ladestellung (L) einen Schwenkbereich (36) einer Heckklappe des Kraftfahrzeugs (111) freigibt.

## Claims

1. Load carrier for a motor vehicle (111), in particular a car, with a loading rack (112a; 112d) provided for carrying a load (150) and which in an operating position of the load carrier (110a-110e) extends rearwards beyond a rear section of the motor vehicle (111) and provides a loading area (119) for the placing of a load (150), with a swivel part assembly (117a; 117b) with at least one swivel part (118a-118d; 192d; 192e; 118a'-d') for enlarging the loading area (119), wherein the swivel part or parts (118a-118d; 192d; 192e; 118a'-d') is or are mounted pivotably by a swivel part bearing section (38) on a loading rack bearing zone (139) of the loading rack (112a; 112d) around a swivel axis (63) between a position of use (G) and an inoperative position (N), wherein there is provided on the loading rack bearing zone (139) a swivel stop (142a; 142d) against which the swivel part or parts (118a-118d; 192d; 192e; 118a'-d') strikes or strike in the position of use (G), and wherein there is fixed to the loading rack (112a; 112d) on the loading rack bearing zone (139) at least one load fastening fixture (165a; 165b; 165d) for the fastening of a load (150) mounted on the swivel part or parts (118a-118d; 192d; 192e; 118a'-d'), wherein the load fastening fixture or fixtures (165a; 165b; 165d) by holding the load (150) fastened to it or them fixes or fix the swivel part or parts (118a-118d; 192d; 192e; 118a'-d') so that it or they will not swivel, **characterised in that** the load fastening fixture or fixtures (165a; 165b; 165d) is or are fixed to the loading rack (112a; 112d) on opposite sides of the swivel part or parts (118a-118d; 192d; 192e; 118a'-d').

2. Load carrier according to claim 1, **characterised in that** the load fastening fixture (165a; 165b; 165d) contains or forms a clamping fixture (171a-171e) for clamping the load (150) to the loading rack (112a; 112d).

3. Load carrier according to claim 1 or 2, **characterised in that** the load fastening fixture or fixtures (165a; 165b; 165d) is or are fixed within a swivelling range of the swivel part or parts (118a-118d; 192d; 192e; 118a'-d') close to the swivel stop (142a; 142d) and/or outside a swivelling range of the swivel part or parts (118a-118d; 192d; 192e; 118a'-d') on the loading rack (112a; 112d).

4. Load carrier according to any of the preceding claims, **characterised in that** the swivel part or parts (118a-118d; 192d; 192e; 118a'-d') has or have a seating area (197) for placing the load (150), in particular a mounting area for a cycle (151), a clearance (198) from the swivel part bearing section (38), and that the load fastening fixture or fixtures (165a; 165b; 165d) act on the load (150) at a holding area (199) removed from the seating area (197).

5. Load carrier according to any of the preceding claims, **characterised in that** the load fastening fixture or fixtures (165a; 165b; 165d) has or have an encompassing fixture (170) for encompassing the load (150), in particular the rim of a cycle (151), wherein the encompassing fixture (170) encompasses the swivel part or parts (118a-118d; 192d; 192e; 118a'-d') preferably when the swivel part or parts (118a-118d; 192d; 192e; 118a'-d') is or are in its or their position of use.

6. Load carrier according to claim 5, **characterised in that** the encompassing fixture (170) encompasses the load (150) at a holding area (199) which is removed from a seating area (197) for placing the load (150).

7. Load carrier according to any of claims 5 or 6, **characterised in that** the encompassing fixture (170) includes an encompassing bracket or an encompassing hook for hooking around the load or a holding belt (166a; 166b; 166d; 166e), in particular a clamping belt for slinging around the load (150), wherein the holding belt (166a; 166b; 166d; 166e) includes in particular at least two holding belt parts (168a-168e).

8. Load carrier according to claim 7, **characterised in that** it has a snap-in location (174) for engaging with snap-in projections (172) on a holding belt (166a; 166b; 166d; 166e) or a holding belt part (168a-168e).

9. Load carrier according to claim 7 or 8, **characterised in that** it includes a clamping lever (205) for clamping the holding belt (166a; 166b; 166d; 166e), in particular the holding belt parts (168a-168e) together, wherein the clamping lever (205) has in particular a toothed area for engaging in mating teeth (204) on a holding belt (166a; 166b; 166d; 166e).

10. Load carrier according to claim 9, **characterised in that** the clamping lever (205) is designed with the effect of a ratchet drive, wherein the clamping lever (205) engages in the direction of clamping with the holding belt (166a; 166b; 166d; 166e) to be clamped, while in the opposite direction to the direction of clamping it swivels freely or ratcheting away over the holding belts (166a; 166b; 166d; 166e).

11. Load carrier according to claim 9 or 10, **characterised in that** the clamping lever (205) is assigned a detent (202) to hold the holding belt (166a; 166b; 166d; 166e) conveyed by the clamping lever (205) towards the detent (202) during a clamping stroke.

12. Load carrier according to any of claims 7 to 11, **characterised in that** the holding belt (166a; 166b; 166d; 166e) is fixed, at least at one end, to a swivel holder part (176) mounted pivotably on the loading rack bearing zone (139), and/or that a swivel bearing shaft (196) penetrates the holding belt (166a; 166b; 166d; 166e).

13. Load carrier according to any of claims 7 to 12, **characterised in that** the holding belt (166a; 166b; 166d; 166e) has in its axial direction sections of different rigidity, in particular sections made of plastic components of different rigidity.

14. Load carrier according to any of the preceding claims, **characterised in that** the swivel part or parts (118a-118d; 192d; 192e; 118a'-d') has or have at least one channel (52), in particular for holding a cycle (151).

15. Load carrier according to any of the preceding claims, **characterised in that** the swivel part or parts (118a-118d; 192d; 192e; 118a'-d') is or are fixed axially and substantially immovable relative to its swivel axis (163).

16. Load carrier according to any of the preceding claims, **characterised in that** the swivel part assembly (117a; 117b) has at least two swivel parts (118a-118d; 192d; 192e; 118a'-d'), which are pivotably mounted on two opposite loading rack bearing zones (139), and that the two or more swivel parts (118a-118d; 192d; 192e; 118a'-d') are arranged in the inoperative position (N) on top of one another or next to one another in a storage space (121) bounded by the loading rack (112a; 112d), and in the position of use (G) protrude beyond the loading rack (112a; 112d), flush with one another, in particular that the opposing swivel parts (118a-118d; 192d; 192e; 118a'-d') protrude downwards at an angle from the loading rack (112a; 112d) in the position of use (G).

17. Load carrier according to any of the preceding claims, **characterised in that** the swivel part assembly (117a; 117b) has a first and at least one second pair (148a, 149a; 148b, 149b) of swivel parts (118a-118d; 192d; 192e; 118a'-d') mounted opposite one another on the loading rack (112a; 112d), wherein the swivel parts (118a-118d) of at least one of the swivel part pairs (148a, 149a; 148b, 149b) are able to swivel individually or are linked by a coupling device (181).

18. Load carrier according to any of the preceding claims, **characterised in that** the swivel part or parts (118a-118d; 192d; 192e; 118a'-d') is or are in the form of a swivelling vane, and that the swivel part (118a-118d; 192d; 192e; 118a'-d') has a single channel (52, 161).

19. Load carrier according to any of the preceding claims, **characterised in that** the loading rack bearing zone (139) is provided on a tube (127) of the loading rack which is encompassed by the swivel part or parts (118a-118d; 192d; 192e; 118a'-d'), or through which passes a swivel bearing seat (141) of the swivel part or parts (118a-118d; 192d; 192e; 118a'-d'), wherein the swivel stop (142a; 142d) is mounted preferably on a loading rack support part (126a, 126b, 126') holding the tube (127) and in particular U-shaped.

20. Load carrier according to any of the preceding claims **characterised in that** it has at least one socket (156) for at least one plug component (122) which is inserted in the socket or sockets (156) for a position of use (G), wherein the plug component or components (122) comprises in particular a support which in the position of use (G) protrudes upwards in front of the loading rack (112a; 112d), and/or in particular comprises a lamp which in the position of use (G) is mounted on the loading rack (112a; 112d) or a swivel part (118a-118d; 192d; 192e; 118a'-d').

21. Load carrier according to claim 20, **characterised in that** the plug component or components forms an integral part (122) of a plug component group (123) which, in the inoperative position (N), may be located in a storage space (121) of the loading rack (112a; 112d).

22. Load carrier according to any of the preceding claims, **characterised in that** it has a mounting for releasable fitting of a trailer coupling (180) of the motor vehicle (111), and/or that the loading rack (112a; 112d) may be mounted on the motor vehicle (111) with the ability to swivel and/or slide between a position of use (G) protruding rearwards beyond the motor vehicle (111), and an inoperative position (N) concealed behind or beneath a body contour of the motor vehicle (111).

23. Load carrier according to any of the preceding claims, **characterised in that** the loading rack (112a; 112d) is mounted on a support structure (113) with the ability to swivel and/or slide between a vehicle running position (F) provided for driving of the motor vehicle (111) and a loading position (L) provided for loading and unloading of the motor vehicle (111), and that the loading rack (112a; 112d) in the loading position (L) makes free a swivelling range (36) of a tailgate of the motor vehicle (111).

## Revendications

1. Support de charge pour un véhicule automobile (111), en particulier une voiture de tourisme, avec un bâti de chargement (112a ; 112d) qui est prévu pour porter une charge (150), qui dépasse, dans une position de travail du support de charge (110a-110e), vers l'arrière d'une zone arrière du véhicule automobile (111) et qui met à disposition une zone de chargement (119) pour le chargement d'une charge (150), avec un ensemble de partie pivotante (117a; 117b) présentant au moins une partie pivotante (118a-118d ; 192d; 192e; 118a'-d') pour l'élargissement de la zone de chargement (119), l'au moins une partie pivotante (118a-118d ; 192d ; 192e ; 118a'-d') étant logée de manière pivotante avec une zone de palier de partie pivotante (38) sur une zone de palier de bâti de chargement (139) du bâti de chargement (112a; 112d) autour d'un axe de pivotement (63) entre une position d'utilisation (G) et une position de non utilisation (N), sur la zone de palier de bâti de chargement (139) étant disposée une butée de pivotement (142a; 142d), contre laquelle l'au moins une partie pivotante (118a-118d ; 192d ; 192e ; 118a'-d') bute dans la position d'utilisation (G), et sur le bâti de chargement (112a ; 112d) sur la zone de palier de bâti de chargement (139) étant fixé au moins un dispositif de fixation de charge (165a ; 165b ; 165d) pour la fixation d'une charge (150) disposée sur l'au moins une partie pivotante (118a-118d ; 192d ; 192e ; 118a'-d'), l'au moins un dispositif de fixation de charge (165a ; 165b ; 165d) fixant de manière solidaire en pivotement par le maintien de la charge (150) fixée avec lui l'au moins une partie pivotante (118a-118d; 192d ; 192e ; 118a'-d'), **caractérisé en ce que** l'au moins un dispositif de fixation de charge (165a ; 165b ; 165d) est fixé sur des côtés opposés de l'au moins une partie pivotante (118a-118d ; 192d ; 192e ; 118a'-d') sur le bâti de chargement (112a ; 112d).

2. Support de charge selon la revendication 1, **caractérisé en ce que** le dispositif de fixation de charge (165a ; 165b ; 165d) contient ou forme un dispositif de serrage (171 a-171 e) pour le serrage de la charge (150) sur le bâti de chargement (112a ; 112d).

3. Support de charge selon la revendication 1 ou 2, **caractérisé en ce que** l'au moins un dispositif de fixation de charge (165a ; 165b ; 165d) est fixé dans une zone de pivotement de l'au moins une partie pivotante (118a-118d ; 192d ; 192e ; 118a'-d') près de la butée de pivotement (142a ; 142d) et/ou en dehors d'une zone de pivotement de l'au moins une partie pivotante (118a-118d ; 192d ; 192e ; 118a'-d') sur le bâti de chargement (112a ; 112d).

4. Support de charge selon l'une quelconque des revendications précédentes, **caractérisé en ce que** l'au moins une partie pivotante (118a-118d ; 192d ; 192e ; 118a'-d') présente une zone d'appui (197) pour l'appui de la charge (150), en particulier une zone de placement pour un vélo (151), une distance (198) par rapport à la zone de palier de partie pivotante (38) et **en ce que** l'au moins un dispositif de fixation de charge (165a ; 165b ; 165d) saisit la charge (150) sur une zone de retenue (199) éloignée de la zone d'appui (197).

5. Support de charge selon l'une quelconque des revendications précédentes, **caractérisé en ce que** l'au moins un dispositif de fixation (165a ; 165b ; 165d) présente un dispositif d'enveloppement (170) pour envelopper la charge (150), en particulier une jante d'un vélo (151), le dispositif d'enveloppement (170) enveloppant de préférence l'au moins une partie pivotante (118a-118d ; 192d ; 192e ; 118a'-d') si l'au moins une partie pivotante (118a-118d ; 192d ; 192e ; 118a'-d') est dans sa position d'utilisation.

6. Support de charge selon la revendication 5, **caractérisé en ce que** le dispositif d'enveloppement (170) entoure la charge (150) sur une zone de retenue (199) qui est éloignée d'une zone d'appui (197) pour l'appui de la charge (150).

7. Support de charge selon l'une quelconque des revendications 5 ou 6, **caractérisé en ce que** le dispositif d'enveloppement (170) comporte un étrier d'enveloppement ou un crochet d'enveloppement pour recourber la charge ou une courroie de retenue (166a ; 166b ; 166d ; 166e), en particulier une courroie de serrage pour enlacer la charge (150), la courroie de retenue (166a ; 166b ; 166d ; 166e) comportant en particulier au moins deux parties de courroie de retenue (168a-e, 169a-e).

8. Support de charge selon la revendication 7, **caractérisé en ce qu'**il présente un logement d'encliquetage (174) pour l'encliquetage avec des saillies d'encliquetage (172) sur une courroie de retenue (166a ; 166b ; 166d ; 166e) ou une partie de courroie de retenue (168a-168e).

9. Support de charge selon la revendication 7 ou 8, **caractérisé en ce qu'**il comporte un levier de serrage (205) pour le serrage de la courroie de retenue (166a ; 166b ; 166d ; 166e), en particulier des parties de courroie de retenue (168a-e, 169a-e) l'une contre l'autre, le levier de serrage (205) présentant en particulier une zone dentée pour l'engagement dans une contre-denture (204) sur une courroie de retenue (166a-166b ; 166d ; 166e).

10. Support de charge selon la revendication 9, **caractérisé en ce que** le levier de serrage (205) est configuré au sens d'un entraînement à cliquet, le levier de serrage (205) étant en engagement dans le sens de serrage avec la courroie de retenue (166a ; 166b ; 166d ; 166e) à serrer, alors qu'il pivote librement ou par encliquetage dans le sens opposé au sens de serrage par le biais de la courroie de retenue (166a ; 166b ; 166d ; 166e).

11. Support de charge selon la revendication 9 ou 10, **caractérisé en ce qu'**un cliquet de verrouillage (202) est associé au levier de serrage (205) pour la retenue de la courroie de retenue (166a ; 166b ; 166d ; 166e) transportée par le levier de serrage (205) lors d'une course de serrage dans le sens du cliquet de verrouillage (202).

12. Support de charge selon l'une quelconque des revendications 7 à 11, **caractérisé en ce que** la courroie de retenue (166a ; 166b ; 166d ; 166e) est fixée sur au moins une extrémité sur une partie du support de pivotement (176) logée de manière pivotante sur la zone de palier de bâti de chargement (139) et/ou **en ce que** la courroie de retenue (166a; 166b ; 166d ; 166e) est traversée par un arbre de palier de pivotement (196).

13. Support de charge selon l'une quelconque des revendications 7 à 12, **caractérisé en ce que** la courroie de retenue (166a ; 166b ; 166d ; 166e) présente dans son sens longitudinal des sections avec une rigidité différente, en particulier des sections se composant de composants synthétiques avec une rigidité différente.

14. Support de charge selon l'une quelconque des revendications précédentes, **caractérisé en ce que** l'au moins une partie pivotante (118a-118d ; 192d ; 192e ; 118a'-d') présente au moins une rigole (52), en particulier pour le logement d'un vélo (151).

15. Support de charge selon l'une quelconque des revendications précédentes, **caractérisé en ce que** l'au moins une partie pivotante (118a-118d ; 192d ; 192e ; 118a'-d') est fixée axialement sensiblement de manière immobile par rapport à son axe de pivotement (163).

16. Support de charge selon l'une quelconque des revendications précédentes, **caractérisé en ce que** l'ensemble de partie pivotante (117a ; 117b) présente au moins deux parties pivotantes (118a ; 118d ; 192d ; 192e ; 118a'-d') qui sont logées de manière pivotante sur deux zones de palier de bâti de chargement (139) opposées, et **en ce que** les au moins deux parties pivotantes (118a-118d ; 192d ; 192e ; 118a'-d') sont disposées dans la position de non utilisation (N) l'une sur l'autre ou l'une à côté de l'autre dans un espace de dépôt (121) délimité par le bâti de chargement (112a ; 112d) et dépassent du bâti de chargement (112a ; 112d) dans la position d'utilisation (G) en s'alignant l'une avec l'autre, en particulier **en ce que** les parties pivotantes (118a ; 118d ; 192d ; 192e ; 118a'-d') opposées dépassent, dans la position d'utilisation (G), en biais vers le bas du bâti de chargement (112a ; 112d).

17. Support de charge selon l'une quelconque des revendications précédentes, **caractérisé en ce que** l'ensemble de partie pivotante (117a ; 117b) présente une première et au moins une seconde paire (148a ; 149a ; 148b ; 149b) de parties pivotantes (118a; 118d; 192d ; 192e ; 118a'-d') logées de manière opposée sur le bâti de chargement (112a; 112d), les parties pivotantes (118a-118d) au moins de l'une des paires de parties pivotantes (148a, 149a ; 148b, 149b) étant pivotantes individuellement ou couplées par un dispositif de couplage (181).

18. Support de charge selon l'une quelconque des revendications précédentes, **caractérisé en ce que** l'au moins une partie pivotante (118a ; 118d ; 192d ; 192e ; 118a'-d') est configurée comme une aile pivotante et **en ce que** la partie pivotante (118a; 118d ; 192d ; 192e ; 118a'-d') présente une seule rigole (52, 161).

19. Support de charge selon l'une quelconque des revendications précédentes, **caractérisé en ce que** la zone de palier de bâti de chargement (139) est prévue sur un tube (127) du bâti de chargement qui est enveloppé par l'au moins une partie pivotante (118a ; 118d ; 192d ; 192e ; 118a'-d') ou qui est enfiché par un logement de palier de pivotement (141) de l'au moins une partie pivotante (118a ; 118d ; 192d ; 192e ; 118a'-d'), la butée de pivotement (142a ; 142d) étant de préférence disposée sur une partie de support de bâti de chargement (126, 126b, 126') en particulier en forme de U, maintenant le tube (127).

20. Support de charge selon l'une quelconque des revendications précédentes, **caractérisé en ce qu'**il présente au moins un logement à enficher (156) pour au moins un composant à enficher (122) qui est enfiché pour une position d'utilisation (G) dans l'au moins un logement à enficher (156), l'au moins un composant à enficher (122) comportant en particulier un appui qui dépasse dans la position d'utilisation (G) vers le haut du bâti de chargement (112a ; 112d) et/ou comporte en particulier une lampe qui est disposée dans la position d'utilisation (G) sur le bâti de chargement (112a ; 112d) ou une partie pivotante (118a-118d ; 192d ; 192e ; 118a'-d').

21. Support de charge selon la revendication 20, **caractérisé en ce que** l'au moins un composant à enficher (122) forme un constituant d'un groupe de composant à enficher (123) qui peut être disposé dans la position de non utilisation (N) dans un espace de dépôt (121) du bâti de chargement (112a ; 112d).

22. Support de charge selon l'une quelconque des revendications précédentes, **caractérisé en ce qu'**il présente un support pour la disposition détachable sur un attelage (180) du véhicule automobile (111) et/ou **en ce que** le bâti de chargement (112a ; 112d) est logé de manière pivotante et/ou mobile sur le véhicule automobile (111) entre une position d'utilisation (G) dépassant vers l'arrière du véhicule automobile (111) et une position de non utilisation (N) cachée derrière ou sous un contour de carrosserie du véhicule automobile (111).

23. Support de charge selon l'une quelconque des revendications précédentes, **caractérisé en ce que** le bâti de chargement (112a ; 112d) est logé de manière pivotante et/ou mobile sur une structure portante (113) entre une position de roulement (F) prévue pour un mode de roulement du véhicule automobile (111) et une position de chargement (L) prévue pour le chargement et le déchargement du véhicule automobile (111) et **en ce que** le bâti de chargement (112a ; 112d) libère dans la position de chargement (L) une zone pivotante (36) d'un hayon du véhicule automobile (111).
